# EUROPÄISCHE PATENTSCHRIFT

(11) **EP 2 378 118 B1**
(45) Veröffentlichungstag und Bekanntmachung des Hinweises auf die Patenterteilung: **25.05.2016**
(21) Anmeldenummer: 11001788.6
(22) Anmeldetag: 03.03.2011
(51) Int. Cl.: F03D 13/20, F03D 80/00, E04B 1/98

(54) **Turmschwingungsdämpfer für eine Windenergieanlage und Windenergieanlage**
Tower oscillation dampener for a wind turbine and wind turbine
Amortisseur des vibrations d'une tour pour une éolienne et éolienne

(30) Priorität: 16.04.2010 DE 102010015160
(43) Veröffentlichungstag der Anmeldung: 19.10.2011
(73) Patentinhaber: Wölfel Beratende Ingenieure GmbH & Co. KG, 97204 Höchberg (DE)
(72) Erfinder: Katz, Sebastian, 97082 Würzburg (DE); Wölfel, Horst Peter, 97204 Höchberg (DE); Pankoke, Steffen, 97837 Erlenbach (DE); Dennert, Martin, 56321 Brey (DE)
(74) Vertreter: Knoblauch, Andreas

(56) Entgegenhaltungen:
- EP-A2- 1 961 955
- DE-A1- 3 215 428
- JP-A- 2002 323 088
- US-A- 3 733 834
- US-A- 5 168 967

## Beschreibung

Die Erfindung betrifft einen Turmschwingungsdämpfer insbesondere für eine Windenergieanlage mit einem Pendel, das eine Masse mit mindestens einer Aufhängung und eine erste Antriebseinrichtung aufweist. Ferner betrifft die Erfindung eine Windenergieanlage mit einem Turm, der einen Rotor aufweist.

Windenergieanlagen weisen in der Regel einen relativ hohen Turm auf, an dessen Kopf ein Rotor mit mehreren Rotorblättern befestigt ist. Der Rotor wird mit Windkraft angetrieben, wobei die Rotationsenergie des Rotors in einem Generator in Strom umgewandelt wird.

Windenergieanlagen höherer Leistung sind relativ groß. Turmhöhen von 100 m und mehr sind keine Seltenheit, wobei Durchmesser der Rotoren größer als 80 m sein können. Dabei sollen die Windenergieanlagen möglichst leicht ausgebildet sein. Durch die Bewegung des Rotors sowie weitere Umwelteinflüsse wird der Turm der Windenergieanlage zu Schwingungen angeregt. Insbesondere bei Offshore-Windenergieanlagen, also Windenergieanlagen, die in Küstennähe auf einem Fundament im Meer aufgestellt sind, erfolgt dabei eine zusätzliche Schwingungsanregung durch die auf das Fundament bzw. den Turm treffenden Wellen. Dabei ist es konstruktiv nicht immer ohne weiteres möglich, zu vermeiden, dass eine Eigenfrequenz der Windenergieanlage im Bereich der Anregungsfrequenz durch die Wellen liegt. So kann beispielsweise eine Anregung durch Wellen in einem Frequenzbereich zwischen 0,1 und 1 Hz erfolgen.

Eine konstruktive Auslegung der Windenergieanlage derart, dass relevante Eigenfrequenzen außerhalb dieses Frequenzbereichs liegen, ist zwar möglich, aber häufig mit einem relativ großen baulichen Aufwand verbunden. Insbesondere steigt damit der Materialaufwand und damit die Kosten.

Es ist daher bekannt, Schwingungstilger im Turm einer Windenergieanlage anzuordnen. So ist in EP 1 961 955 A2 ein aktiver Turmschwingungsdämpfer beschrieben, der eine Masse aufweist, die mit Hilfe von mehreren Aktuatoren in einer Ebene orthogonal zur Turmachse bewegbar ist. Die Masse kann dabei auch in Form eines Pendels am Kopf des Turms aufgehängt sein. Die Aktuatoren sind dann zwischen einer Turmwand und der Masse befestigt.

In DE 198 56 500 A1 ist ein Schwingungstilger beschrieben, der insbesondere in Türmen von Windenergieanlagen eingesetzt werden soll, um Schwingungen zu reduzieren. Der Schwingungstilger ist dabei als Pendel ausgebildet, wobei eine Länge des Pendels und eine Masse auf eine Eigenfrequenz des Turms abgestimmt sind. Dabei kann das Pendel aktiv ausgelenkt werden, um größere Reaktionskräfte und damit eine stärkere Schwingungsdämpfung zu erzielen.

In US 5168967 ist ein Schwingungsdämpfer gemäss dem Oberbegriff des Anspruchs 1 beschrieben.

Eine Anregung der Türme erfolgt nicht immer in der gleichen Richtung. Daher ist es erforderlich, eine Schwingungsrichtung des Schwingungsdämpfers in einer Ebene orthogonal zur Turmachse einstellen zu können. Dafür greifen in der Regel mehrere Antriebe an der Masse an, deren Bewegungen sich überlagern, so dass eine gewünschte Bewegungsrichtung der Masse einstellbar ist. Dabei ist es bekannt, Turmschwingungen mit Hilfe einer oder mehrerer Sensoreinrichtungen zu erfassen. Die Ansteuerung des Turmschwingungsdämpfers erfolgt dann in Abhängigkeit von der Frequenz, Amplitude und Richtung der mit Hilfe der Sensoreinrichtungen erfassten Turmschwingungen. Die Sensoreinrichtung ist dabei beispielsweise als Schwingungs- oder Beschleunigungssensor ausgebildet und im Kopf des Turms angeordnet.

Die Abstimmung der Antriebe und die Kopplung zwischen den Antrieben ist allerdings relativ aufwendig.

Der Erfindung liegt nun die Aufgabe zugrunde, den Aufwand zur Einstellung der Schwingungsrichtung zu verringern.

Erfindungsgemäß wird diese Aufgabe durch einen Turmschwingungsdämpfer der eingangs genannten Art dadurch gelöst, dass eine Winkellage der Führung relative zur Masse in einer Ebene orthogonal zur Turmachse einstellbar ist.

Mit Hilfe der Antriebseinrichtung wird also die erforderliche Schwingungsbewegung bzw. reversierbare Bewegung der Masse erzeugt. Dabei wird die Schwingungsrichtung immer durch die lineare Führung vorgegeben. Anstatt nun die Schwingungsrichtung durch eine entsprechende Ansteuerung mehrerer Antriebe zu verändern, die sich gegenseitig überlagern, erfolgt erfindungsgemäß eine Verstellung der linearen Führung. Die lineare Führung wird dabei in einer Ebene orthogonal zur Turmachse verdreht, so dass eine Winkellage der Führung in Bezug auf einen Turm der Windenergieanlage einstellbar ist. Die lineare Führung ist dabei über einen Winkel von mindestens 180° verstellbar, so dass der Turmschwingungsdämpfer Schwingungen aus jeder Richtung dämpfen kann. Durch diese Ausgestaltung ist es möglich, die Bewegung der Masse nur mit Hilfe einer einzigen reversierbaren Antriebseinrichtung zu steuern. Der Aufwand zur Einstellung der Schwingungsrichtung ist daher relativ gering. Durch entsprechende Auswahl von Pendellänge und Pendelmasse kann das Pendel auf eine häufig auftretende Erregerfrequenz abgestimmt werden, beispielsweise auf 0,2 Hz. Auch eine unterfrequente Abstimmung ist möglich.

Vorzugsweise weist die Aufhängung mindestens ein horizontal elastisches Element auf. Üblicherweise ist die Aufhängung relativ unelastisch und wird durch mindestens ein Stahlseil gebildet. Das Stahlseil ist dann an einem Ende im Turm befestigt, während am anderen Ende die Masse angeordnet ist. Erfindungsgemäß ist nun vorgesehen, dass die Aufhängung nicht unelastisch erfolgt, sondern über mindestens ein horizontal elastisches Element. Dieses horizontal elastische Element ist beispielsweise zwischen einem Stahlseil und einer Befestigungsstelle im Turm angeordnet. Das elastische Element kann beispielsweise durch ein Federelement oder durch ein Elastomer gebildet sein. Durch diese elastische Aufhängung kann eine Eigenfrequenz des Pendels herabgesetzt werden. Dadurch ist es möglich, die Pendellänge klein zu halten und dennoch tiefe Eigenfrequenzen zu erreichen. Dabei ist das elastische Element in horizontaler Richtung elastisch und nicht in Richtung der Pendellänge.

Dabei ist besonders bevorzugt, dass zwischen der Masse und der Führung ein Drehgelenk angeordnet ist. Dadurch ist es möglich, die Winkellage der linearen Führung in Bezug zur Masse zu verändern, wobei die Masse drehfest in einem Turm aufgehängt werden kann. Die Aufhängung der Masse kann dann relativ einfach ausgebildet sein. Ein großer Teil des Turmschwingungsdämpfers, nämlich die Masse mit der Aufhängung, kann dann drehfest in der Windenergieanlage angeordnet werden. Die Einstellung der Schwingungsrichtung erfolgt durch eine Einstellung der Winkellage der linearen Führung, die gegenüber der Masse und dem Turm verdreht werden kann.

Vorzugsweise weist die Führung ein Koppelelement für eine drehbare Befestigung an einer Turmstruktur auf. Dieses Koppelelement dient für eine sichere und einfache Befestigung der linearen Führung an einer Turmstruktur, wobei die Einstellung einer Winkellage gewährleistet ist. Gleichzeitig kann über das Koppelelement eine gute Übertragung der Schwingungskräfte erfolgen.

Vorzugsweise ist die Aufhängung als Parallelführung ausgebildet. Damit wird erreicht, dass die Masse auch bei einer Auslenkung des Pendels nicht verkippt, sondern parallel geführt wird. Zwar erfolgt eine geringfügige Höhenveränderung der Masse, diese kann jedoch in der Regel durch Lagerstellen und ähnliches aufgenommen werden, so dass eine lineare Bewegung der Masse des Pendels entlang der Führung möglich ist. Ein Verkanten der Masse gegenüber der Führung wird durch die Parallelführung verhindert.

Vorteilhafterweise ist eine zweite Antriebseinrichtung zum Einbringen eines Drehmoments zwischen der Masse und der Führung vorgesehen. Der Turmschwingungsdämpfer selbst weist dann alle erforderlichen Antriebseinrichtungen auf, um nicht nur eine Pendelbewegung der Masse hervorzurufen, sondern auch um die Winkellage der Führung einzustellen und damit die Bewegungsrichtung der Masse festzulegen. Eine Einstellung von außen ist dann nicht erforderlich. Der Turmschwingungsdämpfer eignet sich damit insbesondere für die Nachrüstung von bestehenden Windenergieanlagen.

Vorteilhafterweise sind die erste Antriebseinrichtung und die zweite Antriebseinrichtung an einer gemeinsamen Basis befestigt. Es folgt also keine Relativbewegung zwischen den Antriebseinrichtungen. Vielmehr ist ihre gegenseitige Lage durch die Basis festgelegt. Dadurch kann eine sehr stabile Lagerung der Antriebseinrichtungen erfolgen.

Dabei ist bevorzugt, dass die Basis entlang der Führung bewegbar ist. Die Masse der ersten und zweiten Antriebseinrichtungen tragen dann zur bewegten Masse des Turmschwingungsdämpfers bei. Die Masse einer Antriebseinrichtung ist in der Regel nicht unerheblich. Die Masse des Pendels kann dadurch entsprechend verringert werden.

In einer bevorzugten Ausführungsform ist an der Basis eine Achse angeordnet, die sich bis in die Masse hinein erstreckt, wobei die Masse drehbar an der Achse gelagert ist. Durch eine derartige Ausbildung kann die drehbare Lagerung zwischen Achse und Masse innerhalb der Masse angeordnet sein, und ist damit vor äußeren Einflüssen gut geschützt. Dabei kann zwischen der Achse und der Masse eine relativ kleine axiale Bewegung zugelassen werden, ohne dass in Richtung der Führung großes Spiel erforderlich ist. Da die Masse durch die Pendelbewegung gegenüber der Führung einer leichten Höhenverschiebung unterliegt, ist eine geringfügige axiale Bewegung zwischen der Achse und der Masse erforderlich.

Vorzugsweise weist die Führung mindestens ein endliches Abtriebselement auf, das mit mindestens einem Antriebselement der ersten Antriebseinrichtung in Wirkverbindung steht. Das endliche Abtriebselement ist beispielsweise ein Zahnriemen oder eine Zahnstange, wobei das Antriebselement ein Zahnrad ist. Durch eine Bewegung des Zahnrads erfolgt dann eine Bewegung der Antriebseinrichtung und damit der Basis sowie der Masse entlang des Abtriebselements bzw. des Zahnriemens. Die Antriebseinrichtung selbst kann dann eine rotatorische Bewegung erzeugen, also beispielsweise einen herkömmlichen Elektromotor aufweisen. Die lineare Bewegung der Masse wird dann durch das Zusammenwirken von Antriebseinrichtung und Führung bzw. von Antriebselement und Abtriebselement hervorgerufen.

Vorteilhafterweise ist ein Abtriebselement der zweiten Antriebseinrichtung an der Masse festgelegt. Die zweite Antriebseinrichtung selbst ist an der Basis befestigt. Durch einen Betrieb der Antriebseinrichtung erfolgt dann eine Relativverschiebung bzw. eine Verdrehung gegenüber dem Abtriebselement und damit gegenüber der Masse. Da die Führung gegenüber der Basis drehfest ist, erfolgt damit auch eine Einstellung der Winkellage zwischen Führung und Masse.

Die eingangs genannte Aufgabe wird auch durch eine Windenergieanlage mit den Merkmalen des Anspruchs 11 gelöst.

Durch die Anordnung des Turmschwingungsdämpfers im Turm der Windenergieanlage ist es durch einfache Einstellung der Winkellage der Führung möglich, dem Turmschwingungsdämpfer auf die Richtung der Erregerschwingung auszurichten. Ein Antrieb ist dabei zwischen dem Turmschwingungsdämpfer und dem Turm nicht erforderlich. Die Schwingungsrichtung wird vielmehr durch eine Verdrehung innerhalb des Turmschwingungsdämpfers eingestellt. Dabei erfolgt die Auslenkung der Masse nur aufgrund der Bewegung einer einzigen Antriebseinrichtung. Eine Überlagerung verschiedener Antriebseinrichtungen ist dabei nicht erforderlich. Dementsprechend ist eine Schwingungsrichtung mit geringem Aufwand einstellbar.

Dabei ist besonders bevorzugt, dass der Turmschwingungsdämpfer im Turm über mindestens drei Aufhängungen aufgehängt ist. Mit Hilfe von drei Aufhängungen ist eine Parallelführung der Masse erzielbar. Es können aber beispielsweise auch vier Aufhängungen verwendet werden. Dabei kann das Gewicht der Masse des Turmschwingungsdämpfers von den Aufhängungen aufgenommen werden und so direkt im Kopf des Turms angreifen. Da am Kopf des Turms bei Schwingungen die größte Auslenkung erfolgt, führt dies zu einer besonders effektiven Schwingungsdämpfung. Gleichzeitig werden die Antriebseinrichtungen entlastet. Die Führung, die beispielsweise über ein Kugeldrehgelenk mit einer Turmstruktur verbunden ist, muss dann nur relativ geringe Kräfte aufnehmen. Im Wesentlichen sind dies die Führungskräfte und die auf die Antriebseinrichtungen sowie die Basis wirkende Gewichtskraft. Die Gewichtskraft der Masse wird zumindest größtenteils von den Aufhängungen aufgenommen.

Die Erfindung wird im Folgenden anhand eines bevorzugten Ausführungsbeispiels in Verbindung mit den Zeichnungen näher beschrieben. Hierin zeigen:
- Fig. 1: eine schematische Darstellung einer Offshore-Windenergieanlage,
- Fig. 2: eine schematische Darstellung der Anordnung des Turmschwingungsdämpfers in der Windenergieanlage,
- Fig. 3: eine Seitenansicht des Turmschwingungsdämpfers,
- Fig. 4: den Turmschwingungsdämpfer nach Fig. 3 in einer weiteren Seitenansicht,
- Fig. 5: den Turmschwingungsdämpfer in Draufsicht und
- Fig. 6: eine Detailzeichnung des Turmschwingungsdämpfers.

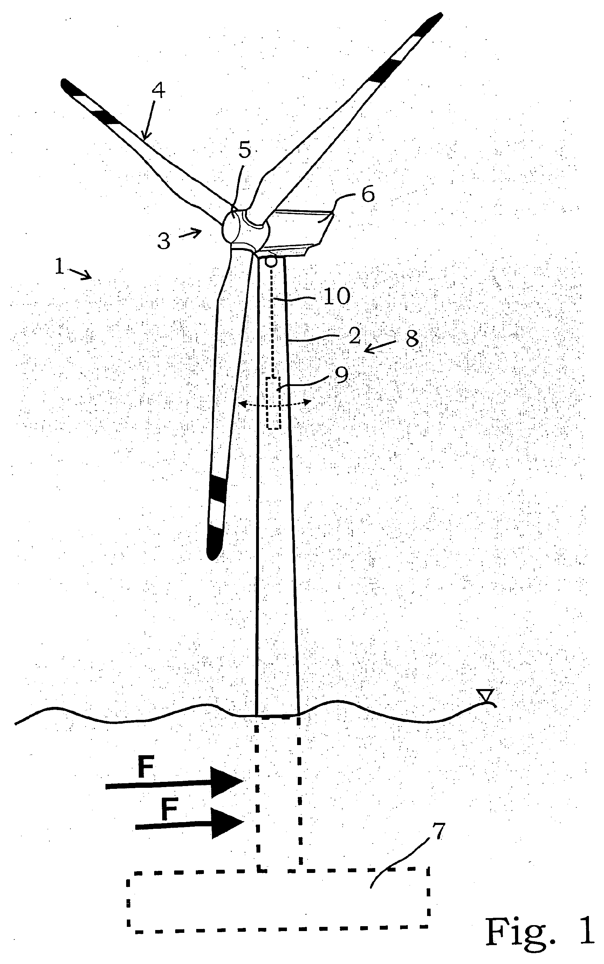

Fig. 1 zeigt eine Windenergieanlage 1 mit einem Turm 2, an dessen Kopf ein Rotor 3 angeordnet ist. Der Rotor 3 weist drei Rotorblätter 4 auf, die an einer Nabe 5 befestigt sind, die drehbar in einem Maschinengehäuse 6 angeordnet ist. Im Maschinengehäuse 6 ist üblicherweise ein Generator untergebracht, in dem durch Rotation der Nabe 5 elektrische Energie gewonnen wird.

Um auch bei wechselnden Windrichtungen einen effektiven Antrieb des Rotors 3 zu erreichen, ist das Maschinengehäuse 6 in der Regel um eine Achse des Turms 2 drehbar.

Der Turm 2 ist mit einem Fundament 7 am Meeresgrund befestigt. Auf das Fundament 7 und damit auf die Windenergieanlage 1 wirken Wellen des Meeres mit einer Frequenz, die u.a. von der Windstärke abhängt. Die Frequenz kann dabei beispielsweise zwischen 0,1 und 1 Hz liegen. Durch die Anregung durch die Wellen, die durch Pfeile F symbolisiert ist, kann die Windenergieanlage 1 und insbesondere der Turm 2 zu Schwingungen angeregt werden. Zur Schwingungsdämpfung ist symbolisch ein Turmschwingungsdämpfer 8 innerhalb des Turms 2 dargestellt, der als Pendel mit einer Masse 9 und einer Aufhängung 10 ausgebildet ist. Die Aufhängung 10 ist dabei am Kopf des Turms 2 im Bereich des Maschinengehäuses 6 befestigt. Eine Länge des Pendels wird dabei durch eine Länge der Aufhängung 10 bestimmt.

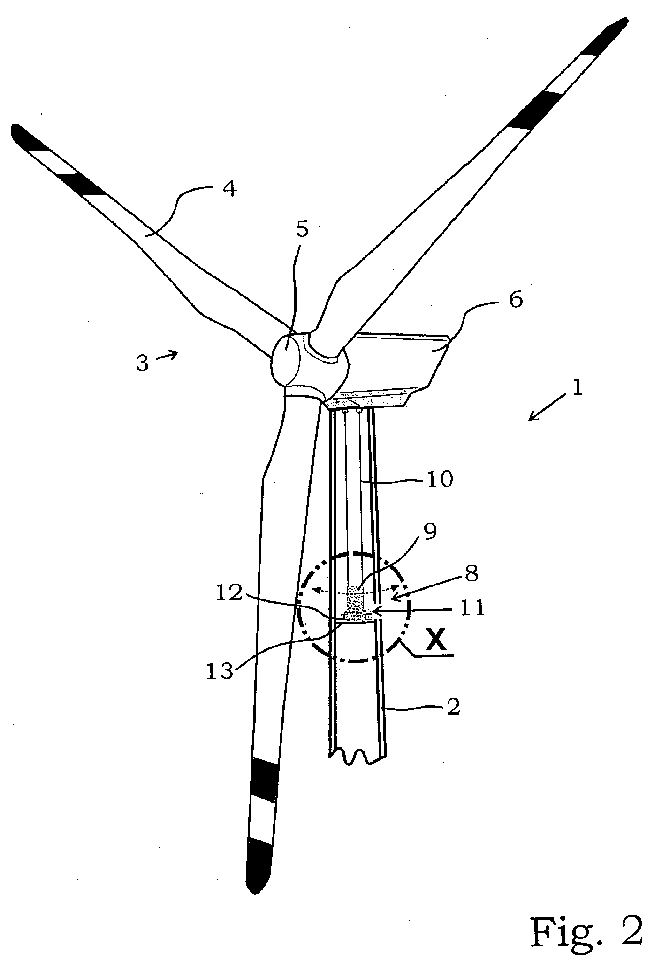

In Fig. 2 ist der Turmschwingungsdämpfer 8 innerhalb des Turms 2 der Windenergieanlage 1 detaillierter dargestellt. Der Turmschwingungsdämpfer 8 ist dabei über vier Aufhängungen 10 im Turm 2 aufgehängt, so dass eine Parallelführung der Masse 9 erreicht wird. Dabei kann die Masse 9 aktiv mit Hilfe einer Antriebseinrichtung 11 ausgelenkt werden, wobei die Masse entlang einer Führung 12 geführt wird, die an einer Turmstruktur 13 drehbar befestigt ist. Die Turmstruktur 13 ist dabei fest mit Turm 2 verbunden.

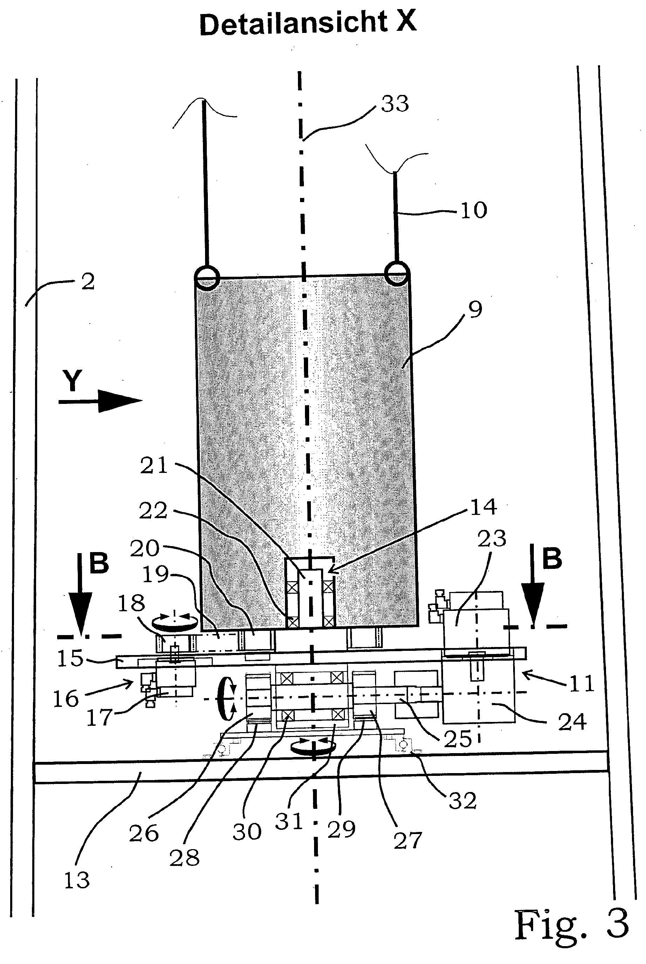

In Fig. 3 ist der Turmschwingungsdämpfer 8 vereinzelt dargestellt. Die Masse 9 kann über Aufhängungen 10 in einem Turm befestigt werden. Dabei sind insgesamt vier Aufhängungen 10 vorgesehen, um eine Parallelführung der Masse 9 zu erreichen. Die Masse 9 bildet mit den Aufhängungen 10 ein Pendel.

Die Masse 9 ist über ein Drehgelenk 14 drehbar an einer Basis 15 befestigt. An der Basis 15 sind die erste Antriebseinrichtung 11 und eine zweite Antriebseinrichtung 16 angeordnet. Die zweite Antriebseinrichtung 16 weist einen Rotationsmotor 17 auf, der ein Zahnrad 18 reversierbar antreibt. Die Bewegung des Zahnrads 18 wird über einen umlaufenden Zahnriemen 19 an ein Abtriebselement 20, das ebenfalls als Zahnrad ausgebildet ist, übertragen. Das Abtriebselement 20 ist drehfest an der Masse 9 gehalten. Bei einer Bewegung der Antriebseinrichtung 16 bzw. des Zahnrads 18 wird also zwischen der Basis 15 bzw. der Führung 12 und der Masse 9 ein Drehmoment eingebracht, das zu einer Verdrehung zwischen Masse 9 und Basis 15 bzw. Führung 12 führt. Dadurch ist eine Winkellage der Führung 12 einstellbar.

Zur Lagerung der Masse 9 weist die Basis 15 eine Achse 21 auf, die sich bis in die Masse 9 hinein erstreckt. Die Masse 9 ist über Drehlager 22 an der Achse 21 gehalten, wobei die Drehlager eine geringfügige axiale Bewegung der Masse 9 zulassen. Die Achse 21 erstreckt sich parallel zu einer Turmachse und orthogonal zu einer Ebene, in der die Einstellung der Winkellage der Führung erfolgt.

Die erste Antriebseinrichtung 11 ist an der Basis 15 festgelegt und weist ebenfalls einen Rotationsmotor 23 auf. Der Rotationsmotor 23 treibt über ein Winkelgetriebe 24 eine Welle 25 an, an der Antriebselemente 26, 27 der ersten Antriebseinrichtung 11 drehfest angeordnet sind. Die Antriebselemente 26, 27 wirken dabei mit jeweils einem endlichen Abtriebselement 28, 29 zusammen, das als Zahnriemen ausgebildet ist. Die endlichen Abtriebselemente 28, 29 sind an der Führung 12 befestigt.

Die Welle 25 ist in einem Lager 30 drehbar gelagert, wobei das Lager 30 in einem Lagerblock 31 untergebracht ist, der an der Basis 15 befestigt ist. Bei einer Bewegung des Motors 23 der ersten Antriebseinrichtung 11 erfolgt also eine Rotation der Welle 23 und damit ein Zusammenwirken der Antriebselemente 26, 27 mit den Abtriebselementen 28, 29 und damit eine Verschiebung der Masse 9 mit der Basis 15 und der ersten und zweiten Antriebseinrichtung 11, 16 in Bezug auf die Führung 12. Ein reversierbarer Betrieb der Antriebseinrichtung erzeugt daher eine Pendelbewegung bzw. Schwingung der Masse 9 entlang der Führung 12.

Bei der Darstellung gemäß Fig. 3 erfolgt dabei eine Bewegung aus der Zeichenebene heraus bzw. in sie hinein.

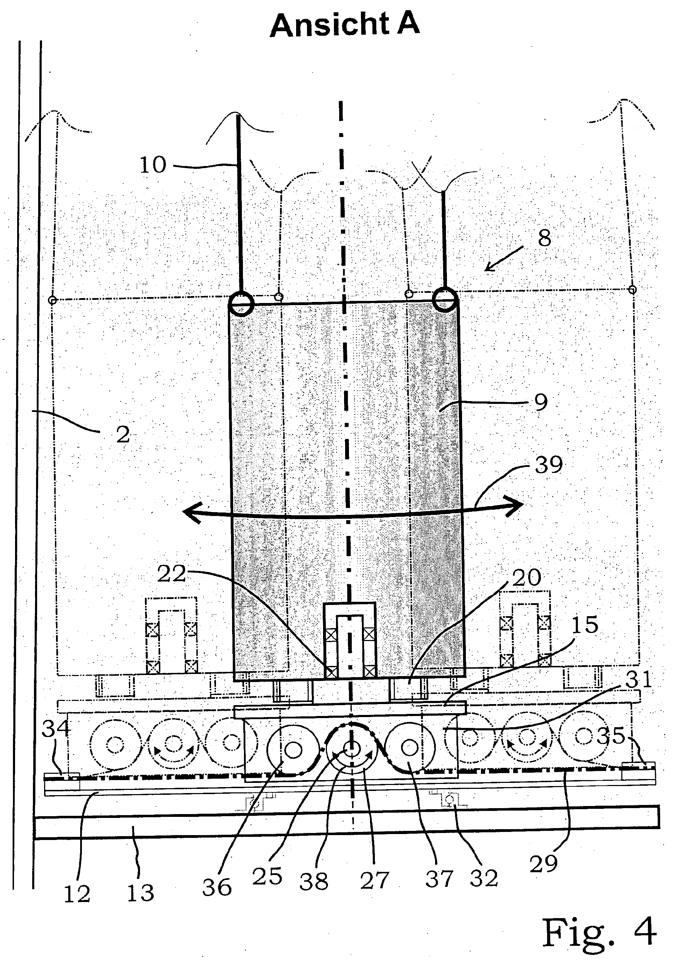

In Fig. 4 ist der Turmschwingungsdämpfer 8 in einer gegenüber Fig. 3 um 90° gedrehten Seitenansicht dargestellt. Gestrichelt dargestellt ist jeweils eine maximale Auslenkung der Masse 9. Gleiche Elemente sind dabei mit den gleichen Bezugszeichen wie in Fig. 3 versehen.

Die Führung 12 ist über ein Koppelelement 32, das als Kugeldrehverbindung ausgebildet ist, mit der Turmstruktur 13 verbunden. Eine Rotationsachse des Koppelelements 32 fällt dabei bezüglich ihrer Richtung mit einer Rotationsachse der Masse 9 bzw. mit der Symmetrieachse der Achse 21 zusammen. Die Rotationsachse 33 ist gestrichelt dargestellt.

Das Abtriebselement 29 ist an Enden 34, 35 der Führung 12 fest eingespannt. Eine Anlage des Abtriebselements 29 am rotierenden Antriebselement 27 wird mit Hilfe von Laufrädern 36, 37 sichergestellt. Bei einer Rotation des Antriebselements 27, die durch einen Pfeil 38 symbolisiert ist, erfolgt je nach Drehrichtung eine Verschiebung.der Masse 9 nach links bzw. nach rechts in Fig. 4. Die Bewegung der Masse 9 ist durch einen Pfeil 39 symbolisiert. Aufgrund der Aufhängungen 10 ist die Bewegung der Masse 9 nicht ausschließlich linear entlang der Führung 12, sondern es erfolgt eine leichte Höhenverschiebung der Masse 9 gegenüber der Führung 12.

Diese Höhenverschiebung wird durch das Drehlager 22 aufgenommen.

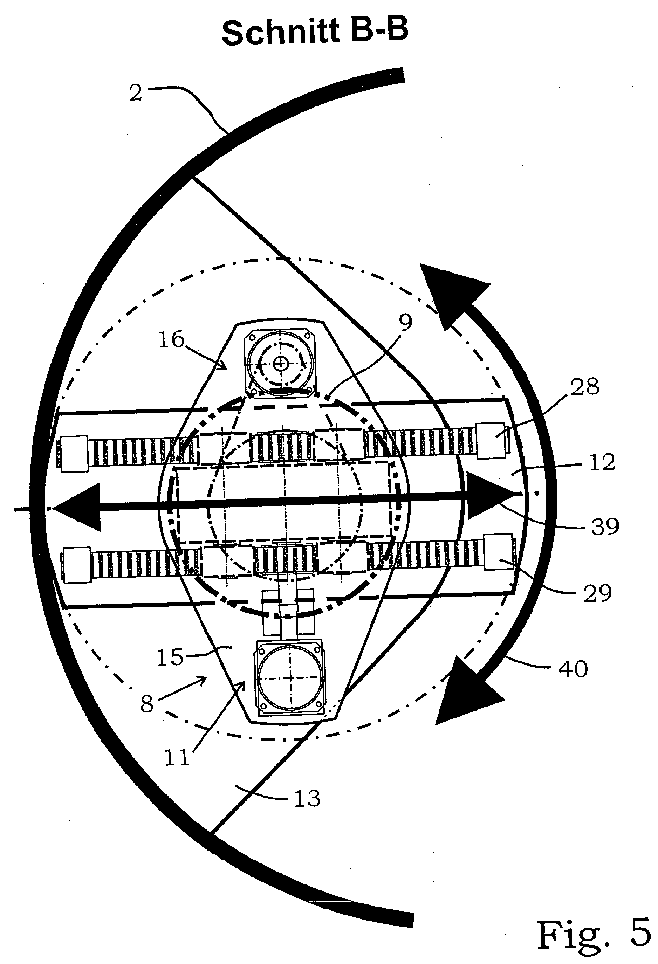

Fig. 5 zeigt eine Draufsicht auf den Turmschwingungsdämpfer 8 und eine mögliche Anordnung des Turmschwingungsdämpfers 8 im Turm 2 der Windenergieanlage 1. Die lineare Pendelbewegung der Masse 9, die durch Bewegungen entlang der Führung 12 durch den Antrieb der Antriebselemente 26, 27 entlang der endlichen Abtriebselemente 28, 29 hervorgerufen wird, wird durch den Pfeil 39 dargestellt. Eine mögliche Winkelverstellung wird durch einen Pfeil 40 symbolisiert. Diese Winkelverstellung 40 erfolgt durch Betrieb der zweiten Antriebseinrichtung 16. Dadurch wird die Schwingungsrichtung der Masse 9 und die Winkellage der Führung 12 bezüglich des Turms 2 eingestellt. Bei einer Bewegung um mindestens 180° kann dabei jede beliebige Schwingungsrichtung eingestellt werden. Beispielsweise ist die Führung 12 um 360° drehbar. Die Masse 9 ist dabei drehfest im Turm 2 gehalten. Es erfolgt also auch eine Winkelverstellung der Führung 12 relativ zur Masse 9. Die Aufhängung der Masse 9 kann relativ einfach ausgebildet sein.

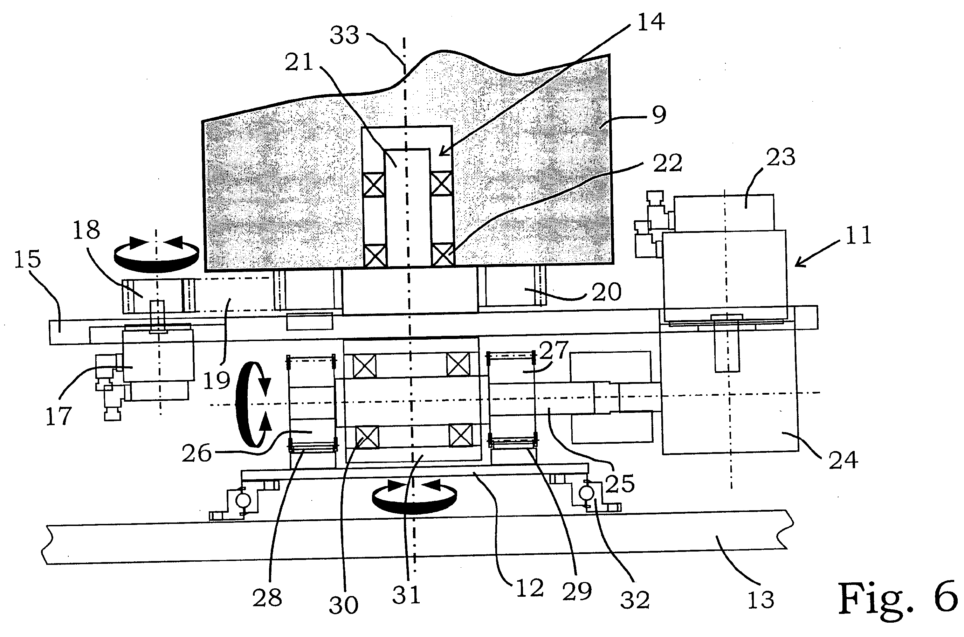

In Fig. 6 ist ein vergrößerter Ausschnitt des Turmschwingungsdämpfers 8 dargestellt. Dabei handelt es sich um einen Ausschnitt aus Fig. 3. Gleiche Teile sind wieder mit gleichen Bezugszeichen versehen.

Die Achse 21 ist auf der Rotationsachse 33 der Masse 9 angeordnet. Dabei trägt die Basis 15 die Achse 21, die erste Antriebseinrichtung 11, die zweite Antriebseinrichtung 26 und den Lagerblock 31. Die erste Antriebseinrichtung 11 dient zur gewünschten Auslenkung der Masse 9 in einer linearen Pendelbewegung entlang der Führung 12, wobei bis auf die Führung 12 und das Koppelelement 32 alle Elemente des Turmschwingungsdämpfers 8 mitbewegt werden. Dementsprechend tragen alle Elemente zur bewegten Masse, die zur Schwingungsdämpfung verwendet wird, bei.

Zur Einstellung der Winkellage der Führung 12 und damit der Richtung der Pendelbewegung bzw. der Schwingungsrichtung ist die Basis 15 über das Drehlager 22 drehbar gegenüber der Masse 9 gelagert und die Führung 12 über das Koppelelement 32 drehbar an einer Turmstruktur 13 befestigt. Die Masse 9 ist bezüglich der Turmstruktur 13 drehfest aufgehängt.

Die Einstellung der Pendelrichtung erfolgt also durch eine Verdrehung innerhalb des Turmschwingungsdämpfers 8, indem die Winkelstellung der Führung 12 bezüglich der Masse 9 verstellt wird. Dabei erfolgt auch eine Verstellung der Winkellage der ersten und zweiten Antriebseinrichtung 11, 16, deren Lage relativ zueinander unverändert bleibt.

Die Richtung der Pendelbewegung wird erfindungsgemäß also nicht durch den Antrieb eingestellt, der für die Erzeugung der Pendelbewegung erforderlich ist. Vielmehr erfolgt eine Winkelverstellung zwischen einer Linearführung und der Masse, also eine Verdrehung innerhalb des Turmschwingungsdämpfers. An Koppelstellen zwischen dem Turmschwingungsdämpfer 8 und einem Turm werden daher nur geringe Anforderungen gestellt. Gleichzeitig kann eine Position zwischen beiden Antriebseinrichtungen unverändert bleiben. Dadurch kann die gewünschte Schwingungsrichtung mit relativ geringem Aufwand eingestellt werden.

## Patentansprüche

1. Turmschwingungsdämpfer mit einem Pendel, das eine Masse mit mindestens einer Aufhängung und eine erste Antriebseinrichtung aufweist, wobei die Masse (9) mit der Antriebseinrichtung (11) entlang einer linearen Führung (12) in einer Ebene orthogonal zu einer Turmachse bewegbar ist, **dadurch gekennzeichnet, dass** eine Winkellage der Führung (12) relativ zur Masse (9) in einer Ebene orthogonal zur Turmachse einstellbar ist.

2. Turmschwingungsdämpfer nach Anspruch 1, **dadurch gekennzeichnet, dass** die Aufhängung mindestens ein horizontal elastisches Element aufweist.

3. Turmschwingungsdämpfer nach Anspruch 1 oder Anspruch 2, **dadurch gekennzeichnet, dass** zwischen der Masse (9) und der Führung (12) ein Drehgelenk (14) angeordnet ist.

4. Turmschwingungsdämpfer nach einem der Ansprüche 1 bis 3, **dadurch gekennzeichnet, dass** die Führung (12) ein Koppelelement (32) für eine drehbare Befestigung an einer Turmstruktur (13) aufweist.

5. Turmschwingungsdämpfer nach einem der Ansprüche 1 bis 4, **dadurch gekennzeichnet, dass** die Aufhängung (10) als Parallelführung ausgebildet ist.

6. Turmschwingungsdämpfer nach einem der Ansprüche 1 bis 5, **dadurch gekennzeichnet, dass** eine zweite Antriebseinrichtung (16) zum Einbringen eines Drehmoments zwischen der Masse (9) und der Führung (12) vorgesehen ist.

7. Turmschwingungsdämpfer nach Anspruch 6, **dadurch gekennzeichnet, dass** die erste Antriebseinrichtung (11) und die zweite Antriebseinrichtung (16) an einer gemeinsamen Basis (15) befestigt sind.

8. Turmschwingungsdämpfer nach Anspruch 7, **dadurch gekennzeichnet, dass** die Basis (15) entlang der Führung (12) bewegbar ist.

9. Turmschwingungsdämpfer nach einem der Ansprüche 7 oder 8, **dadurch gekennzeichnet, dass** an der Basis (15) eine Achse (21) angeordnet ist, die sich bis in die Masse (9) hinein erstreckt, wobei die Masse (9) drehbar an der Achse (21) gelagert ist.

10. Turmschwingungsdämpfer nach einem der Ansprüche 1 bis 9, **dadurch gekennzeichnet, dass** die Führung (12) mindestens ein endliches Abtriebselement (28, 29) aufweist, das mit mindestens einem Antriebselement (26, 27) der ersten Antriebseinrichtung (11) in Wirkverbindung steht.

11. Turmschwingungsdämpfer nach einem der Ansprüche 6 bis 10, **dadurch gekennzeichnet, dass** ein Abtriebselement (28, 29) der zweiten Antriebseinrichtung (16) an der Masse (9) festgelegt ist.

12. Windenergieanlage mit einem Turm, der einen Rotor aufweist, **dadurch gekennzeichnet, dass** sie einen Turmschwingungsdämpfer nach einem der Ansprüche 1 bis 11 aufweist.

13. Windenergieanlage nach Anspruch 12, **dadurch gekennzeichnet, dass** der Turmschwingungsdämpfer (8) im Turm (2) über mindestens drei Aufhängungen (10) aufgehängt ist.

## Claims

1. Tower vibration damper with a pendulum that comprises a mass and a suspension and a first actuating device, wherein the mass (9) can be moved with the actuating device (11) along a linear guide (12) in a plane orthogonal to a tower axis, **characterised in that** an angular position of the guide (12) relative to the mass (9) can be adjusted orthogonally to the tower axis.

2. Tower vibration damper according to claim 1 **characterised in that** the suspension comprises at least one horizontal elastic element.

3. Tower vibration damper according to claim 1 or claim 2 **characterised in that** a rotary joint (14) is arranged between the mass (9) and the guide (12).

4. Tower vibration damper according to any one of claims 1 to 3 **characterised in that** the guide (12) comprises a coupling element (32) for rotational fastening to a tower structure (13).

5. Tower vibration damper according to any one of claims 1 to 4 **characterised in that** the suspension (10) is designed as a parallel guide.

6. Tower vibration damper according to any one of claims 1 to 5 **characterised in that** provided between the mass (9) and the guide (12) is a second actuating device (16) for introducing a torque.

7. Tower vibration damper according to claim 6 **characterised in that** the first actuating device (11) and the second actuating device (16) are attached to a common base (15).

8. Tower vibration damper according to claim 7 **characterised in that** the base (15) can be moved along the guide (12),

9. Tower vibration damper according to any one of claims 7 or 8 **characterised in that** arranged on the base (15) is an axle (21) which extends into the mass (9), wherein the mass (9) is borne on the axle (21) in a rotatable manner.

10. Tower vibration damper according to any one of claims 1 to 9 **characterised in that** the guide (12) comprises at least one continuous output element (28, 29) which interacts with at least one drive element (26, 27) of the first actuating device (11).

11. Tower vibration damper according to any one of claims 6 to 10 **characterised in that** an output element (28, 29) of the second actuating device (16) is attached to the mass (9).

12. Wind energy installation with a tower which has a rotor, **characterised in that** it comprises a tower vibration damper according to any one of claims 1 to 11.

13. Wind energy installation according to claim 12 **characterised in that** the tower vibration damper (8) is suspended in the tower (2) by means of at least three suspensions (10).

## Revendications

1. Amortisseur de vibrations de tour avec un pendule, qui a une masse avec au moins une suspension et un premier dispositif entraîneur, la masse (9) pouvant être déplacée avec le dispositif entraîneur (11) le long d'un guide linéaire (12) dans un plan perpendiculairement à un axe de tour, **caractérisé en ce qu'**une position angulaire du guide (12) par rapport à la masse (9) dans un plan perpendiculairement à l'axe de tour est réglable.

2. Amortisseur de vibrations de tour selon la revendication 1, **caractérisé en ce que** la suspension comporte au moins un élément horizontalement élastique.

3. Amortisseur de vibrations de tour selon la revendication 1 ou selon la revendication 2, **caractérisé en ce qu'**une articulation tournante (14) est agencée entre la masse (9) et le guide (12).

4. Amortisseur de vibrations de tour selon l'une des revendications 1 à 3, **caractérisé en ce que** le guide (12) comporte un élément de couplage (32) pour une fixation pivotante sur une structure de tour (13).

5. Amortisseur de vibrations de tour selon l'une des revendications 1 à 4, **caractérisé en ce que** la suspension (10) est conçue comme un guide parallèle.

6. Amortisseur de vibrations de tour selon l'une des revendications 1 à 5, **caractérisé en ce qu'**un deuxième dispositif entraîneur (16) est prévu pour introduire un moment de couple entre la masse (9) et le guide (12).

7. Amortisseur de vibrations de tour selon la revendication 6, **caractérisé en ce que** le premier dispositif entraîneur (11) et le deuxième dispositif entraîneur (16) sont fixés à une base commune (15).

8. Amortisseur de vibrations de tour selon la revendication 7, **caractérisé en ce que** la base (15) peut être déplacée le long du guide (12).

9. Amortisseur de vibrations de tour selon l'une des revendications 7 ou 8, **caractérisé en ce qu'**un axe (21) est agencé sur la base (15), lequel axe s'étend jusque dans la masse (9), la masse (9) étant logée de manière à pouvoir tourner sur l'axe (21).

10. Amortisseur de vibrations de tour selon l'une des revendications 1 à 9, **caractérisé en ce que** le guide (12) comporte au moins un élément actionné fini (28, 29) qui est en liaison active avec au moins un élément entraîneur (26, 27) du premier dispositif entraîneur (11),

11. Amortisseur de vibrations de tour selon l'une des revendications 6 à 10, **caractérisé en ce qu'**un élément actionné (28, 29) du deuxième dispositif entraîneur (16) est fixé sur la masse (9).

12. Éolienne avec une tour qui comporte un rotor, **caractérisée en ce qu'**elle comporte un amortisseur de vibrations de tour selon l'une des revendications 1 à 11.

13. Éolienne selon la revendication 12, **caractérisée en ce que** l'amortisseur de vibrations de tour (8) est suspendu dans la tour (2) par l'intermédiaire d'au moins trois suspensions (10).
